# EUROPÄISCHE PATENTSCHRIFT

(11) **EP 3 174 799 B1**
(45) Veröffentlichungstag und Bekanntmachung des Hinweises auf die Patenterteilung: **04.07.2018**
(21) Anmeldenummer: 15747114.5
(22) Anmeldetag: 22.07.2015
(51) Int. Cl.: B65B 25/06, B65B 55/12, A23L 3/10, A23B 4/01, B65B 55/04, B65B 61/20, B65B 9/04, B65B 9/10

(54) **VERFAHREN ZUR BEHANDLUNG UND ZUM INVERKEHRBRINGEN VON LEBENSMITTELN**
METHOD FOR TREATING AND DISTRIBUTING FOODSTUFFS
PROCÉDÉ SERVANT À TRAITER ET À METTRE SUR LE MARCHÉ DES PRODUITS ALIMENTAIRES

(30) Priorität: 01.08.2014 DE 102014011626; 01.10.2014 DE 102014014621; 11.03.2015 DE 102015204309
(43) Veröffentlichungstag der Anmeldung: 07.06.2017
(73) Patentinhaber: Triton GmbH, 14089 Berlin (DE); Deutsches Institut für Lebensmitteltechnik e.V., 49610 Quakenbrück (DE)
(72) Erfinder: KORTSCHACK, Fritz, 14089 Berlin (DE)
(74) Vertreter: Kruspig, Volkmar
(86) Internationale Anmeldenummer: PCT/EP2015/066705
(87) Internationale Veröffentlichungsnummer: WO 2016/016055

(56) Entgegenhaltungen:
- EP-A2- 2 495 175
- WO-A1-2010/053595
- US-A- 3 752 618
- US-A1- 2004 018 284

## Beschreibung

Die Erfindung betrifft ein Verfahren zur Behandlung und zum Inverkehrbringen von Lebensmitteln, insbesondere Fleisch- oder Wurstwaren, wobei die Lebensmittel mit einem Verpackungsmaterial umgeben oder in ein Verpackungsmaterial eingebracht werden, wobei das Lebensmittel in und mit der Verpackung einer gezielten Behandlung zur Inaktivierung von Mikroorganismen zum Zweck der Keimreduzierung unterzogen wird, gemäß Oberbegriff des Patentanspruchs 1.

Es ist bekannt, zur Verpackung von Lebensmitteln Folien aus thermoplastischen Kunststoffen zu verwenden, wobei die Folien mit Hilfe eines Extruders mit mindestens einem Extruderkopf bzw. einem Mehrschichtkopf (Düse) oder als ein Folienschlauch oder eine Folienbahn aus thermoplastischem Kunststoff kontinuierlich ausgegeben werden.

Folien weisen die Eigenschaft einer hohen Durchstoß- und Weiterreißfestigkeit auf. Bei Folien wird zwischen solchen Folien unterschieden, die nur aus einer Schicht bestehen, und solchen, die mehrere Schichten aufweisen. Bei Folien aus mehreren Schichten (Coextrusionsfolien) können definierte Eigenschaften verschiedener Materialien in einer Folie kombiniert werden.

So existieren Coextrusionsfolien als Verpackungsmaterialien, die z.B. beim Verpacken und Inverkehrbringen von Schinken Verwendung finden. Die Herstellung von Coextrusionsfolien mit einer optimierten Schichtenfolge für den Einsatz im Bereich der Verpackung von Lebensmitteln ist jedoch sehr aufwendig und damit kostenintensiv.

Ein Verfahren zur Herstellung von Blas- oder Gießfolien ist beispielsweise aus der DE 198 16 869 A1 bekannt.

Preiswertere Folien hingegen können zwar auf ihren Anwendungszweck bezogen optimiert werden, sind jedoch üblicherweise nicht oder nicht ohne weiteres für den Einsatz im Lebensmittelbereich geeignet.

Darüber hinaus ist es bekannt, bei der Produktion von Leberwürsten im Naturdarm die Produkte im Anschluss durch einen Wachsüberzug vor Feuchtigkeitsverlust und einem schnellen Verderb zu schützen.

Aus der WO 2010/053595 A1 ist es bekannt, Fleischwaren keimreduzierend zu behandeln und die Fleischwaen anschließend in einer ebenso keimreduzierend behandelten Verpackung zu verpacken.

Ungeachtet der vielfältigen Verfahren und Mittel zur Verpackung von Lebensmitteln, auch unter Rückgriff auf Kunststofffolien, besteht ein Bedürfnis, die Verpackung selbst so weiterzubilden, dass nicht nur das entsprechende Lebensmittel entsprechend umhüllt ist, sondern eine Keimbildung oder Keimanhäufung am oder auf dem Lebensmittel bzw. der Verpackung verhindert wird.

Aus dem oben Genannten ist es daher Aufgabe der Erfindung, ein weiterentwickeltes Verfahren zur Behandlung und zum Inverkehrbringen von Lebensmitteln, insbesondere Fleisch- oder Wurstwaren anzugeben, wobei die Lebensmittel mit einem Verpackungsmaterial umgeben oder in ein Verpackungsmaterial eingebracht bzw. eingefüllt werden und hierbei auf preiswerte Materialien zurückgegriffen werden kann, ohne dass eine Verschlechterung der Eigenschaften des Lebensmittels oder eine Reduzierung seiner Haltbarkeit eintritt.

Die Lösung der Aufgabe der Erfindung erfolgt durch ein Verfahren gemäß der Lehre nach Patentanspruch 1, wobei die Unteransprüche mindestens zweckmäßige Ausgestaltungen und Weiterbildungen umfassen.

Es wird demnach von einem Verfahren zur Behandlung und zum Inverkehrbringen von Lebensmitteln, insbesondere Fleisch- oder Wurstwaren ausgegangen. Die Lebensmittel werden mit einem Verpackungsmaterial umgeben oder in ein z.B. schlauchförmiges Verpackungsmaterial eingebracht und entsprechend umhüllt.

Dabei wird das Lebensmittel in und mit der Verpackung einer gezielten Behandlung zur Inaktivierung von Mikroorganismen zum Zweck der Keimreduzierung unterzogen.

Erfindungsgemäß wird unmittelbar im Anschluss oder während dieser Behandlung auf die Verpackung eine äußere Schutzschicht aufgebracht.

Das Verpackungsmaterial kann unter dem Aspekt der Kostenreduzierung aus einer Monofolienschicht bestehen oder eine solche Monofolienschicht enthalten.

Die erwähnte Behandlung zur Inaktivierung von Mikroorganismen kann eine ohmsche Erhitzung, eine übliche (Wasserbad, Kochschrank, Infrarotbestrahlung etc.) thermische Behandlung, eine Behandlung mit hochfrequenter Strahlung, ultravioletter Strahlung und/oder eine CO₂-Behandlung bzw. eine Kombination der vorstehend erwähnten Methoden umfassen.

Die erfindungsgemäße Schutzschicht/en kann/können durch Sprühen, Tauchen, Bestreichen auch unterstützt durch elektrostatische Aufladung parallel aber nacheinander aufgebracht werden. Die jeweilige Schutzschicht soll dabei eine solche Eigenart besitzen, dass die Handhabung des verpackten Produkts im Prozess des Inverkehrbringens nicht beeinträchtigt wird.

Ausgestaltend kann das Verpackungsmaterial aus einem PE-Monoschlauchmaterial oder Flachfolie bestehen und das Lebensmittel in den Schlauch/Tiefziehmulde eingefüllt werden. Dabei sind die flexiblen Eigenschaften von PE-Monoschläuchen/-folien von Vorteil, so dass sehr unterschiedliche Geometrien realisiert werden können.

In weiterer Ausgestaltung der Erfindung besteht die Möglichkeit, vor dem Aufbringen der Schutzschicht durch das Verpackungsmaterial hindurch eine Oberflächenbehandlung des Lebensmittels zur geschmacklichen und/oder optischen Gestaltung desselben zu realisieren.

Die Schutzschicht kann aus einem Stoffgemisch bestehen, welches neben dem eigentlichen Schutz des Lebensmittels nebst Verpackung zur optischen und/oder haptischen Aufwertung des so zum Inverkehrbringen geeigneten Produkts dient.

## Patentansprüche

1. Verfahren zur Behandlung und zum Inverkehrbringen von Lebensmitteln, insbesondere Fleisch- oder Wurstwaren, wobei die Lebensmittel mit einem Verpackungsmaterial umgeben oder in ein Verpackungsmaterial eingebracht werden, wobei
das Lebensmittel in und mit der Verpackung einer gezielten Behandlung zur Inaktivierung von Mikroorganismen zum Zweck der Keimreduzierung unterzogen wird,
**dadurch gekennzeichnet, dass**
unmittelbar im Anschluss oder während der Behandlung auf die Verpackung eine Schutzschicht aufgebracht wird.

2. Verfahren nach Anspruch 1,
**dadurch gekennzeichnet, dass**
das Verpackungsmaterial mindestens aus einer Monofolienschicht besteht oder eine solche Schicht enthält.

3. Verfahren nach Anspruch 1 oder 2,
**dadurch gekennzeichnet, dass**
die Behandlung zur Inaktivierung eine ohmsche Erhitzung, eine Ozonbehandlung, eine UV-Strahlungsbehandlung und/oder eine CO₂-Behandlung umfasst.

4. Verfahren nach einem der vorangegangenen Ansprüche,
**dadurch gekennzeichnet, dass**
die Schutzschicht durch Sprühen, Tauchen, Bestreichen oder unterstützt durch elektrostatische Aufladung aufgebracht wird.

5. Verfahren nach einem der vorangegangenen Ansprüche,
**dadurch gekennzeichnet, dass**
das Verpackungsmaterial aus einem PE-Monoschlauchmaterial besteht und das Lebensmittel in den Schlauch eingefüllt wird.

6. Verfahren nach einem der vorangegangenen Ansprüche,
**dadurch gekennzeichnet, dass**
vor dem Aufbringen der Schutzschicht durch das Verpackungsmaterial hindurch eine Oberflächenbehandlung des Lebensmittels zur geschmacklichen und/oder optischen Gestaltung desselben vorgenommen wird.

7. Verfahren nach einem der vorangegangenen Ansprüche,
**dadurch gekennzeichnet, dass**
die Schutzschicht aus einem Stoffgemisch besteht, welches neben dem Schutz des Lebensmittels zur optischen und/oder haptischen Aufwertung des so zum Inverkehrbringen geeigneten Produkts vorgesehen ist.

8. Verfahren nach einem der vorangegangenen Ansprüche,
**dadurch gekennzeichnet, dass**
das Aufbringen von einer oder mehreren Schutzschichten in Abhängigkeit von an sich bekannten technologischen Maßnahmen bei der Behandlung von Lebensmitteln entweder gleichzeitig mit oder während des jeweiligen Behandlungsschritts oder im Anschluss an den betreffenden Behandlungsschritt erfolgt.

9. Verfahren nach Anspruch 8,
**dadurch gekennzeichnet, dass**
die Behandlungsschritte beispielsweise Erhitzen, Aromatisieren, Begasen, Bestrahlen oder Ähnliches umfassen.

## Claims

1. A method for treating and marketing foodstuffs, in particular meat or sausage products, wherein the foodstuffs are enveloped by a packaging material or are introduced in a packaging material, wherein
the foodstuff is subjected to a targeted treatment in and with the packaging to inactivate micro-organisms for the purpose of microbial reduction,
**characterized in that**
immediately following or during the treatment, a protective layer is applied to the packaging.

2. The method according to claim 1,
**characterized in that**
the packaging material consists of at least one mono-foil layer or contains such a layer.

3. The method according to claim 1 or 2,
**characterized in that**
the treatment for inactivation comprises an ohmic heating, an ozone treatment, a UV radiation treatment and/or a CO₂ treatment.

4. The method according to anyone of the preceding claims,
**characterized in that**
the protective layer is applied by spraying, dipping, coating or assisted by electrostatic charging.

5. The method according to anyone of the preceding claims,
**characterized in that**
the packaging material consists of a PE mono-hose material and the foodstuff is filled into the hose.

6. The method according to anyone of the preceding claims,
**characterized in that**
prior to applying the protective layer, a surface treatment of the foodstuff is carried out through the packaging material for taste and/or visual design of the same.

7. The method according to anyone of the preceding claims,
**characterized in that**
the protective layer consists of a material mixture which, in addition to the protection of the foodstuff, is provided for visual and/or haptic enhancement of the product thus suitable for marketing.

8. The method according to anyone of the preceding claims,
**characterized in that**
the application of one or more protective layers is performed depending on per se known technological measures in the treatment of foodstuffs either at the same time as or during the respective treatment step or following the relevant treatment step.

9. The method according to claim 8,
**characterized in that**
the treatment steps, for example, comprise heating, flavoring, gassing, radiating or similar.

## Revendications

1. Procédé pour traiter et mettre sur le marché des produits alimentaires, en particulier des produits de boucherie et de charcuterie, les produits alimentaires étant entourés par un matériau d'emballage ou étant introduits dans un matériau d'emballage,
dans lequel
le produit alimentaire est soumis, dans et avec l'emballage, à un traitement ciblé pour inactiver des micro-organismes dans le but de réduire les germes,
**caractérisé en ce que**
directement à la suite ou pendant le traitement, une couche de protection est déposée sur l'emballage.

2. Procédé selon la revendication 1,
**caractérisé en ce que**
le matériau d'emballage est constitué d'au moins une monocouche en feuille ou contient une telle couche.

3. Procédé selon la revendication 1 ou 2,
**caractérisé en ce que**
le traitement pour l'inactivation comprend un échauffement ohmique, un traitement à l'ozone, un traitement aux rayons ultraviolets et/ou un traitement au CO₂.

4. Procédé selon l'une des revendications précédentes,
**caractérisé en ce que**
la couche de protection est déposée par pulvérisation, immersion, enduction ou avec le soutien d'une charge électrostatique.

5. Procédé selon l'une des revendications précédentes,
**caractérisé en ce que**
le matériau d'emballage est constitué d'un matériau monotube PE et le produit alimentaire est rempli dans le tube.

6. Procédé selon l'une des revendications précédentes,
**caractérisé en ce que**
avant de déposer la couche de protection, on réalise un traitement de surface du produit alimentaire à travers le matériau d'emballage pour obtenir un aspect en termes de goût et/ou un aspect optique de celui-ci.

7. Procédé selon l'une des revendications précédentes,
**caractérisé en ce que**
la couche de protection est constituée par un mélange de substances destiné, outre à la protection du produit alimentaire, à la valorisation optique et/ou haptique du produit ainsi approprié à la mise sur le marché.

8. Procédé selon l'une des revendications précédentes,
**caractérisé en ce que**
la déposition d'une ou de plusieurs couches de protection s'effectue en fonction de mesures technologiques connues en elles-mêmes lors du traitement de produits alimentaires soit simultanément soit pendant l'étape de traitement respective soit encore à la suite de l'étape de traitement concernée.

9. Procédé selon la revendication 8,
**caractérisé en ce que**
les étapes de traitement comprennent par exemple réchauffement, l'aromatisation, le traitement au gaz, l'irradiation ou similaires.
